(19) Europäisches Patentamt

European Patent Office

Office européen des brevets

(11) **EP 2 918 625 A1**

(12) **EUROPEAN PATENT APPLICATION**
published in accordance with Art. 153(4) EPC

(43) Date of publication:
**16.09.2015 Bulletin 2015/38**

(21) Application number: **13853136.3**

(22) Date of filing: **22.10.2013**

(51) Int Cl.:
**C08G 69/28** $^{(2006.01)}$

(86) International application number:
**PCT/JP2013/078626**

(87) International publication number:
**WO 2014/073373 (15.05.2014 Gazette 2014/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.11.2012 JP 2012246252**

(71) Applicant: **Mitsubishi Gas Chemical Company, Inc.**
**Tokyo 100-8324 (JP)**

(72) Inventors:
• **MUNEYASU, Kuniaki**
**Niigata-shi**
**Niigata 950-3121 (JP)**

• **KIMURA, Yuya**
**Niigata-shi**
**Niigata 950-3121 (JP)**
• **SHINOHARA, Katsumi**
**Niigata-shi**
**Niigata 950-3121 (JP)**
• **TOCHIHARA, Tatsuya**
**Niigata-shi**
**Niigata 950-3121 (JP)**
• **KUROSE, Hideyuki**
**Niigata-shi**
**Niigata 950-3121 (JP)**

(74) Representative: **Vossius & Partner**
**Patentanwälte Rechtsanwälte mbB**
**Siebertstrasse 3**
**81675 München (DE)**

(54) **METHOD FOR PRODUCING POLYAMIDE**

(57) The invention is a method for producing a polyamide having a melting point of 255°C or higher through polycondensation of a mixed xylylenediamine containing paraxylylenediamine as a diamine component and a dicarboxylic acid component in a batch reactor, wherein when the diamine component is dropwise added to the dicarboxylic acid component kept in a melt state by heating it to a temperature not lower than a melting point thereof under a pressure of 0.1 MPaG or more with keeping the melt state of a reaction mixture, a temperature of the reaction mixture is maintained at 255°C or lower until a molar ratio (diamine component/dicarboxylic acid component) of the reaction mixture reaches 0.8, and the temperature of the reaction mixture at the end of the dropwise addition is controlled to be not lower than the melting point of the polyamide. The method enables production of a polyamide having an improved hue and being advantageous with respect to quality.

EP 2 918 625 A1

**Description**

Technical Field

The present invention relates to a method for producing a polyamide having a melting point of 255°C or higher through polycondensation of a dicarboxylic acid component and a diamine component containing paraxylylenediamine in a batch reactor.

Background Art

Patent Document 1 discloses a method for producing a copolyamide through polycondensation of a dicarboxylic acid and a diamine, as mixed directly, under normal pressure, in which the reaction start temperature is not lower than the melting point of the dicarboxylic acid, the reaction is carried out with heating so that the reaction system containing the raw material mixture can keep a substantially uniform melt state, and before the reaction rate could reach 95%, the reaction system is heated up to a temperature lower by 30°C than the melting point of the resultant copolyamide or more; thereby the reaction temperature is so controlled that the reaction could go on in a uniform system without losing flowability in the system. Regarding the upper temperature limit of the reaction system to be controlled, however, it merely describes that the temperature should not be higher by 50°C than the melting point of the polyamide but does not disclose any concrete upper temperature limit of the reaction system in the reaction step.

Patent Document 2 discloses a method of polycondensation of a dicarboxylic acid and a diamine containing 70 mol% or more of a metaxylylenediamine component, as directly mixed, under normal pressure, in which a part of the diamine component is continuously dropwise added to a melt of the dicarboxylic acid component in a molar ratio of the diamine component to the dicarboxylic acid component (diamine component/dicarboxylic acid component) of from 0.900 to 0.990 and, during the addition the reaction mixture is continuously heated up to a temperature not higher by 5°C than the melting point of the intended polyamide. However, in the case where a polyamide is produced that is formed from a mixed xylylenediamine component containing 30 mol% or more of paraxylylenediamine as the diamine component, only a polyamide having a high yellowness index could be obtained even though the temperature of the reaction mixture is controlled to be not higher by 5°C than the melting point of the intended polyamide in the step of dropwise adding the diamine component, and therefore stable products could not be obtained.

Patent Document 3 discloses a method for producing a polyamide through direct polycondensation of a diamine component that contains 70 mol% or more of xylylenediamine containing paraxylylenediamine and a dicarboxylic acid component in the absence of a solvent, in which the diamine component is dropwise added under a pressurized condition. Regarding the upper limit of the reaction liquid temperature, however, it describes that the temperature is preferably higher by 35°C than the melting point of the polyamide or less but does not disclose any concrete temperature, and even though the system is kept at a temperature not higher than such a temperature, only a polyamide having a high yellowness index could be obtained.

Accordingly, in direct polycondensation of a mixed xylylenediamine containing paraxylylenediamine and a dicarboxylic acid component, a method of producing a polyamide having an improved hue is desired.

PRIOR ART DOCUMENTS

PATENT DOCUMENTS

Patent Document 1: JP-B 1-14925
Patent Document 2: JP-A 58-111829
Patent Document 3: JP-A 2010-7055

Summary of Invention

Technical Problem

An object of the present invention is to provide a method for producing a polyamide having a melting point of 255°C or higher through polycondensation of a diamine component containing paraxylylenediamine and a dicarboxylic acid component in a batch reactor, in which the polyamide having an improved hue and superior quality is produced.

Solution to Problem

As a result of assiduous studies, the present inventors have found that, in a method of producing a polyamide having a melting point of 255°C or higher through polycondensation of a diamine component containing paraxylylenediamine and a dicarboxylic acid component in a batch reactor, with controlling the temperature of the reaction mixture to be not higher than a specified temperature until the reaction mixture in melt polymerization reaches a specific molar ratio, a polyamide having an improved hue can be produced, and then have completed the present invention.

Specifically, the present invention relates to a method for producing a polyamide having a melting point of 255°C or higher through polycondensation of a mixed xylylenediamine containing paraxylylenediamine as a diamine component and a dicarboxylic acid component in a batch reactor, in which when the diamine component is dropwise added to the dicarboxylic acid component that has been kept in a melt state by heating it to a temperature not lower than a melting point thereof, under a pressure of 0.1 MPaG or more, with keeping the melt state of the reaction mixture, the temperature of the reaction mixture is maintained at 255°C or lower until the molar ratio (diamine component/dicarboxylic acid component) of the reaction mixture reaches 0.8, and the temperature of the reaction mixture at the end of the dropwise addition is controlled to be not lower than the melting point of the polyamide.

Advantageous Effects of Invention

According to the present invention, in producing a polyamide having a melting point of 255°C or higher through polycondensation of a mixed xylylenediamine containing paraxylylenediamine and a dicarboxylic acid component in a batch reactor, a polyamide having a markedly improved hue can be produced without requiring any additional production equipment. With respect to polyamide produced according to the method of the present invention, the yellowness index is markedly reduced, and therefore, when the polyamide is processed into packaging containers, containers with no yellowness can be obtained and the commercial value thereof can be thereby greatly enhanced. Even in applications where a colorant is blended such as molding applications and the like, color control is easy since the yellowness index of the raw polyamide is extremely small. Consequently, the industrial utility value of the polyamide produced according to the method of the present invention is great.

Description of Embodiments

The diamine component used in the production method of the present invention is a diamine that contains a mixed xylylenediamine in an amount of preferably 70 mol% or more, more preferably 90 mol% or more in the total diamine component in view of practical performance of the resulting polyamide, the mixed xylylenediamine containing paraxylylenediamine. Here, from the viewpoint of the crystallinity and the melting point of the resulting polyamide, the mixed xylylenediamine contains paraxylylenediamine as the essential component, and the paraxylylenediamine content in the mixed xylylenediamine is preferably at least 25 mol%, more preferably from 25 to 95 mol%, even more preferably from 30 to 95 mol%. Also preferably, the mixed xylylenediamine consists of two components of metaxylylenediamine and paraxylylenediamine.

Further, as the other diamine component, there are exemplified aliphatic diamines such as tetramethylenediamine, pentamethylenediamine, 2-methylpentanediamine, hexamethylenediamine, heptamethylenediamine, octamethylenediamine, nanomethylenediamine, decamethylenediamine, dodecamethylenediamine, 2,2,4-trimethyl-hexamethylenedimaine, 2,4,4-trimethylhexamethylenediamine, and so on; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl)propane, bis(aminomethyl)decalin, bis(aminomethyl)tricyclodecane, and so on; diamines having aromatic ring such as bis(4-aminophenyl) ether, paraphenylenediamine. bis(aminomethyl)naphthalene, and so on. In the case where the other diamine than xylylenediamine is used, the content thereof is preferably within a range of less than 30 mol% of the total diamine component.

As the dicarboxylic acid component for use in the production method of the present invention, for example, there are exemplified aliphatic dicarboxylic acids such as succinic acid, glutaric acid, adipic acid, pimelic acid, suberic acid, azelaic acid, sebacic acid, undecane-diacid, dodecane-diacid, and so on. One of these or the mixture of two or more may be used. Of these, preferred is adipic acid or sebacic acid and more preferred is adipic acid from the viewpoint of the melting point, the moldability and the gas-barrier performance of the polyamide.

The content of the aliphatic dicarboxylic acid in the total dicarboxylic acid component is preferably 70 mol% or more, more preferably 90 mol% or more, even more preferably 100 mol%.

Further, as the other carboxylic acid, there are exemplified phthalic acid compounds such as terephthalic acid, isophthalic acid, orthophthalic acid, and so on; naphthalenedicarboxylic acids such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, 2,7-naphthalenedicarboxylic acid, and so on. Preferred is terephthalic acid or isophthalic acid.

In the case where the other carboxylic acid than the aliphatic dicarboxylic acid is used, the content thereof is preferably 30 mol% or less, more preferably 10 mol% or less in the total dicarboxylic acid component.

In producing the polyamide in the present invention, a phosphorus compound may be added from the viewpoint of increasing the working stability in melt molding, from the viewpoint of inhibiting discoloration of the polyamide, and as a catalyst for promoting the amidation. Examples of the phosphorus compound include a hypophosphorous acid compound, such as hypophosphorous acid and hypophosphorous salt; a phosphorous acid compound, such as phosphorous acid, phosphorous salt, and phosphorous ester; and a phosphoric acid compound, such as phosphoric acid, phosphoric salt, and phosphoric ester, and so on. Examples of the hypophosphorous salt include potassium hypophosphite, sodium hypophosphite, calcium hypophosphite, magnesium hypophosphite, manganese hypophosphite, nickel hypophosphite, cobalt hypophosphite, and so on. Examples of the phosphorous salt include potassium phosphite, sodium phosphite, calcium phosphite, magnesium phosphite, manganese phosphite, nickel phosphite, cobalt phosphite, and so on. Examples of the phosphorous ester include methyl phosphite, ethyl phosphite, isopropyl phosphite, butyl phosphite, hexyl phosphite, isodecyl phosphite, decyl phosphite, stearyl phosphite, phenyl phosphite, and so on. Examples of the phosphoric salt include potassium phosphate, sodium phosphate, calcium phosphate, magnesium phosphate, manganese phosphate, nickel phosphate, cobalt phosphate, and so on. Examples of the phosphoric ester include methyl phosphate, ethyl phosphate, isopropyl phosphate, butyl phosphate, hexyl phosphate, isodecyl phosphate, decyl phosphate, stearyl phosphate, phenyl phosphate, and so on. One alone or two or more of these phosphorous compounds may be used here either singly or in combination. As the method of adding the phosphorus compound, there are mentioned a method of adding the phosphorus compound to a diamine component or a dicarboxylic acid component that is the raw material for the polyamide; a method of adding the phosphorus compound to the reaction mixture during polycondensation, and so on, but it is not limited to these.

Adding a phosphorus compound to the polyamide is expected to prevent discoloration of the polyamide, but on the contrary, would bring about gelation of the polyamide or would lower the transparency of the polyamide molded products (films, hollow containers, etc.), and therefore, it is desirable to reduce as much as possible the amount of the phosphorus compound to be added. The production method of the present invention can provide a polyamide having a good hue without using a phosphorus compound, but when a phosphorus compound is added, the amount of the phosphorus compound to be added is from 1 to 500 ppm in terms of the phosphorus atom concentration in the polyamide, preferably from 1 to 350 ppm, more preferably from 1 to 150 ppm, even more preferably from 5 to 100 ppm.

Preferably in the present invention, the polyamide is produced in the absence of a solvent. The term "in the absence of a solvent" referred to herein means to conduct the production in the complete absence of a solvent and also in the presence of a solvent in a small amount not adversely affecting the effect of the present invention.

Not specifically defined, the batch reactor for use in the present invention may be any one having a structure usable as a polymerization apparatus, but is preferably pressure-resistant type and equipped with a partial condenser and a stirrer. Further, for preventing the diamine component and the dicarboxylic acid component from being distilled away, it is desirable that the reactor is equipped with the partial condenser capable of controlling the temperature of the heat-transfer surface thereof.

In the present invention, for producing a polyamide having a desired molar ratio, the molar ratio of the raw materials may be selected in any manner. As the method of controlling the molar ratio of the raw materials, for example, there is exemplified a method of metering the dicarboxylic acid in a melt state with a mass meter, then supplying it to the reactor, and thereafter supplying the diamine component to the reaction system while metering the diamine component stored in a reservoir with a mass meter. Also exemplified here is a method of putting the dicarboxylic acid component previously metered into the reactor as a powder thereof, then heating and melting it in the reactor, and thereafter supplying the diamine component to the reaction system. In the present invention, when the diamine component and the dicarboxylic acid components are metered, a mass meter such as a load cell, a pair of balances, and so on can be utilized.

The dicarboxylic acid component that is powdery or in a melt state is charged into the reactor and then the pressure inside the reactor is increased to 0.1 MPaG or more. The pressurization may be attained with an inert gas such as nitrogen or the like or with steam. Depending on the diamine component and the dicarboxylic acid component to be used, the pressure is preferably selected from a range of from 0.1 to 0.4 MPaG. In view of avoiding the discoloration of polyamide by oxidation, it is preferable to purge the reactor sufficiently with an inert gas such as nitrogen or the like before the reactor is charged with the dicarboxylic acid component. In the case where the dicarboxylic acid component put into the reactor as a powder is melted, it is desirable that the component is melted in an inert gas atmosphere. The dicarboxylic acid component may be melted in the reactor by heating to its melting point or higher. Alternatively, the dicarboxylic acid component may be melted in a dedicated melting tank different from the reactor by heating it to its melting point or higher therein, and then the resultant melt may be charged into the reactor. In view of increasing the working efficiency of the reactor, use of the dedicated melting tank is preferred.

With stirring the dicarboxylic acid component heated at a temperature not lower than the melting point thereof and kept in a melt state, the diamine component is dropwise added thereto under a pressure of 0.1 MPaG or more. The diamine component is continuously or intermittently added to the dicarboxylic acid component being in a melt state. During the addition, the temperature of the reaction mixture is successively elevated to maintain the melt state of the reaction mixture. The melting point of the reaction mixture can be confirmed by suitably measuring it through DSC, etc. The temperature of the reaction mixture can be confirmed by measuring the temperature of the reaction liquid (the reaction mixture kept in a melt state) with a resistance temperature detector or a thermocouple inserted into the apparatus. The temperature of the reaction mixture is preferably controlled to fall within a range of from the temperature not lower than the melting point of the reaction mixture to the temperature higher by 20°C than the melting point of the reaction mixture. However, until the molar ratio (diamine component/dicarboxylic acid component) of the reaction mixture during dropwise addition of the diamine component has reached 0.8, the temperature of the reaction mixture must be controlled to be 255°C or lower. If the temperature of the reaction mixture before the molar ratio reaches 0.8 is controlled to be higher than 255°C, there would occur some phenomena that the hue of the resultant polyamide worsens and the yellowness index thereof increases, and in particular, during discharging the polyamide from the reactor, the hue of the polyamide worsens. By maintaining the temperature of the reaction mixture at 255°C or lower until the molar ratio reaches 0.8, a remarkable effect of improving the hue of the polyamide to be produced can be realized. This effect is remarkably seen when the diamine component contains paraxylylenediamine.

After the molar ratio (diamine component/dicarboxylic acid component) of the reaction mixture reaches 0.8, dropwise addition of the diamine component is continued until the molar ratio (diamine component/dicarboxylic acid component) of the reaction mixture reaches preferably from 0.9 to 1.1, more preferably from 0.95 to 1.05, even more preferably from 0.97 to 1.03, and the temperature of the reaction mixture at the end of the dropwise addition is to be a temperature not lower than the melting point of the polyamide. After the dropwise addition of the diamine component, preferably, the system is kept under the pressure at the end of the dropwise addition of the diamine component for from 5 minutes to 3 hours, more preferably for from 10 minutes to 1 hour, while the entire reaction system is kept in a uniform flow able state.

The present invention is applicable to the case where the melting point of the intended polyamide is 255°C or higher. In the case where a polyamide having a melting point of lower than 255°C is produced, the reaction mixture could be kept in a melt state without elevating the temperature of the reaction mixture to 255°C or higher, and naturally, therefore, the polyamide could be produced at 255°C or lower. As opposed to this, in the case of producing a polyamide having a melting point of 255°C or higher, it is necessary to heat the system up to a temperature higher than 255°C, that is a temperature higher than the melting point of the polyamide, until the end of the dropwise addition of the diamine component. In this case, by maintaining the temperature of the reaction mixture to fall within a range of 255°C or lower during the period until the molar ratio (diamine component/dicarboxylic acid component) of the reaction mixture reaches 0.8, the hue of the resultant polyamide can be improved and the discoloration can be prevented in the step of discharging the polyamide from the reactor.

For maintaining the reaction liquid of a melt of the reaction mixture in the reactor to be in a uniform state, the temperature of the reaction mixture needs to be not lower than the melting point of the reaction mixture at that time. Simultaneously with this, during the period until the molar ratio (diamine component/dicarboxylic acid component) of the reaction mixture during the dropwise addition of the diamine component reaches 0.8, the temperature of the reaction mixture needs to be maintained at 255°C or lower, and therefore the upper limit of the melting point of the reaction mixture during the period until the molar ratio has reached 0.8 is substantially 255°C.

The melting point of the polyamide to be produced in the present invention is 255°C or higher, preferably 256°C or higher, more preferably 257°C or higher. As such a polyamide, for example, in the case where adipic acid is the main component of the dicarboxylic acid component, and further where adipic acid accounts for preferably 70 mol% or more, more preferably 90 mol% or more, even more preferably 100 mol% of the total dicarboxylic acid, there is exemplified a polyamide produced through polycondensation using, as the diamine component, a mixed xylylenediamine with metaxylylenediamine that contains paraxylylenediamine in a range of from 25 mol% to 50 mol% (paraxylylenediamine/metaxylylenediamine = 25/75 to 50/50 (molar ratio)). Also for example, in the case where sebacic acid is the main component of the dicarboxylic acid component, and further where sebacic acid accounts for preferably 70 mol% or more, more preferably 90 mol% or more, even more preferably 100 mol% of the total dicarboxylic acid, there is exemplified a polyamide produced through polycondensation using, as the diamine component, a mixed xylylenediamine with metaxylylenediamine that contains paraxylylenediamine in a range of from 70 mol% to 95 mol% (paraxylylenediamine/metaxylylenediamine = 70/30 to 95/5 (molar ratio)). "Main component" of the dicarboxylic acid means that the specific component selected from adipic acid or sebacic acid is within a range of from more than 50 mol% to 100 mol% of the total dicarboxylic acid component.

The upper limit of the melting point of the polyamide to be produced in the present invention is not specifically defined. However, from the viewpoint that the temperature of the reaction mixture is kept at 255°C or lower until the molar ratio (diamine component/dicarboxylic acid component) of the reaction mixture during the dropwise addition of the diamine component reaches 0.8, the melting point is preferably 285°C or lower, more preferably 280°C or lower.

The melting point referred to in the present invention is the temperature of the heat absorption peak attributable to the heat of fusion of the crystal which is observed in differential scanning calorimetry (DSC), etc. The melting point of the reaction mixture can be determined by DSC, etc.

In the case of continuous dropwise addition of the diamine component, the dropwise addition rate thereof is selected so as to prevent the foaming attributable to the condensation water generated in polycondensation, and the time to be taken for dropwise addition of the diamine component is preferably from 30 minutes to 4 hours, more preferably from 60 minutes to 2 hours. Dropwise addition within an extremely short period of time is unfavorable since the liquid level rises owing to foaming caused by the large amount of the generating condensation water and the polymer may adhere to the side wall of the reactor or to the stirrer, etc.

The condensation water which is generated while the condensation reaction proceeds is evaporated off out of the reaction system through a partial condenser and then a cooler. Here, from the viewpoint of preventing the amidation inside the partial condenser, it is desirable that the temperature of the vapor-side outlet of the partial condenser is controlled to be 155°C or lower, more preferably controlled to be a temperature falling within a range of not higher than 155°C and not lower than the saturated vapor temperature of water and not higher than the temperature higher by 5°C than the saturated vapor temperature of water.

The diamine component and the dicarboxylic acid component evaporated away along with the condensation water are separated from the condensation water in the partial condenser, and are again returned back to the reactor. In the case where the temperature of the vapor-side outlet of the partial condenser is extremely higher than the dew point of water, a large amount of the diamine component would be inevitably evaporated away from the reaction system, and control of the molar ratio would be difficult. Therefore, it is desired to suitably select the operation conditions of the partial condenser so as to regulate the temperature of the vapor-side outlet of the partial condenser to fall within a preferred range. For example, in the case where the pressure inside the reactor is 0.3 MPaG, the temperature of the vapor-side outlet of the partial condenser is preferably controlled to be from 143°C to 148°C.

After the dropwise addition of the diamine component, the pressure inside the reactor is lowered to atmospheric pressure or lower, preferably at a depressurizing rate of from 0.1 to 1.0 MPa/hr. In this case, the pressure is lowered to a reduced pressure condition, preferably down to 80 kPa or less, so that the water vapor existing in the vapor phase part is distilled out of the reaction system to thereby further increase the degree of polymerization of the polyamide.

During the step of lowering the pressure inside the reactor, the depressurizing rate is so selected as to prevent the produced polyamide from foaming. Depending on the scale of the reactor and the pressure therein, it is desirable that the pressure is lowered at a rage of from 0.1 to 1.0 MPa/hr. When the pressure is lowered at a rate higher than 1.0 MPa/hr, the liquid level may rise owing to foaming and therefore the polymer may adhere to the side wall of the reactor or to the stirring blade, etc. When the pressure is lowered at a rate lower than 0.1 MPa/hr, there may occur some inconveniences such as yellowing owing to the increase in the thermal history of the polyamide, and productivity slowdown. The depressurizing rate is preferably within a range of from 0.3 to 0.6 MPa/hr, more preferably within a range of from 0.4 to 0.5 MPa/hr.

After the depressurization, in general, the reactor is pressurized for discharging out the resultant polyamide therefrom. In this case, preferably used is an inert gas such as nitrogen, etc. The time to be taken to discharge the polyamide out of the reactor is preferably as short as possible from the viewpoint of preventing thermal degradation as much as possible. On the other hand, when the discharging rate is increased, the discharging apparatus is to be large. From these viewpoints, the time to be taken to discharge the polyamide out of the reactor is preferably from 10 to 80 minutes, more preferably from 30 to 60 minutes.

The polyamide obtained in the present invention may be subjected to a solid state polymerization for further polymerization to obtain a polyamide with a higher molecular weight. Alternatively, the polyamide obtained in the present invention may be supplied to a continuous polymerization apparatus in a melt state for further polymerization to obtain a polyamide with a higher molecular weight.

Examples

The present invention is described in more detail with reference to the examples and comparative examples. However, it should be noted that the scope of the present invention is not limited by the following examples and comparative examples. Each method for analysis is described below.

(1) Terminal amino group concentration

From 0.3 to 0.5 g of the polyamide was accurately weighed, and dissolved in 30 mL of a mixed solution of phenol/ethanol = 4/1 by volume with stirring at 20 to 30°C. After complete dissolution, the terminal amino group concentration was determined by neutralization titration using N/100 (0.01 mol/L) hydrochloric acid with stirring.

(2) Terminal carboxyl group concentration

From 0.3 to 0.5 g of a polyamide was accurately weighed and dissolved in 30 mL of benzyl alcohol with stirring in a nitrogen stream atmosphere at from 160 to 180°C. After complete dissolution, this was cooled to 80°C or lower in a nitrogen stream atmosphere, then 10 mL of methanol was added thereto with stirring, and the terminal carboxyl group concentration was determined by neutralization titration using an aqueous solution of N/100 (0.01 mol/L) sodium hydroxide.

(3) Number-average molecular weight

The number-average molecular weight was determined from the titration quantitative values of the terminal amino group and the terminal carboxyl group, according to the following equation.

$$\text{Number-Average Molecular Weight} = 2/([NH_2] + [COOH])$$

wherein $[NH_2]$ is the terminal amino group concentration ($\mu$eq/g) and [COOH] is the terminal carboxyl group concentration ($\mu$eq/g).

(4) Yellowness (YI)

The yellowness index of the polyamide pellets was measured according to JIS-K7103, using a colorimeter (ZE2000 Model manufactured by Nippon Denshoku Industries Co., Ltd.).

(5) Melting Point

The melting point was measured using DSC (DSC-50 Model manufactured by Shimadzu Corporation) at a heating rate of 10°C/min in a nitrogen stream atmosphere (nitrogen flow rate: 50 ml/min).

Example 1

Into an oil-jacketed 50-L stainless reactor equipped with a partial condenser through which a temperature-controlled oil was to pass, a total condenser, a stirrer, a nitrogen gas inlet, and an opening for dropping diamine, 15.000 kg of adipic acid (purity: 99.85 wt%) accurately weighed was charged as a powder, and thoroughly purged with nitrogen. The temperature was elevated by introducing an oil at 300°C through the jacket to melt the adipic acid into a uniform fluid state with stirring. During the melting, the supply of nitrogen into the reactor was started to increase the inner pressure to 0.3 MPaG. When the temperature reached 190 °C, 13.909 kg of a mixed xylylenediamine (purity:99.95 wt%) of 70 mol% of m-xylylenediamine and 30 mol% of p-xylylenediamine was continuously added dropwise over 2 hours while stirring the molten adipic acid. While the diamine component was dropwise added, the reaction mixture was heated up to temperatures not more than an upper limit of 250°C so as to be kept as a melt state until the molar ratio (diamine component/dicarboxylic acid component) of the reaction mixture reached 0.8. Subsequently, the heating was so controlled that the temperature of the reaction mixture at the end of the dropwise addition of the diamine component reached 265°C. The pressure in the reactor during the dropwise addition of the diamine component was controlled to be 0.3 MPaG, and the temperature of the vapor-side outlet of the partial condenser was to be from 144 to 147°C. The distilling water vapor was condensed through a cooler and removed out of the reaction system. After the dropwise addition of the diamine component, the reaction mixture was continuously heated with stirring, and the pressure in the reactor was kept at 0.3 MPaG for 20 minutes. The molar ratio (diamine component/dicarboxylic acid component) of the reaction mixture at the end of the dropwise addition of the diamine component was 1.0. Then, the inner pressure was reduced to 80 kPaA at a depressurizing rate of 0.6 MPa/h and then kept at 80 kPaA for 7 minutes. Finally, the temperature of the reaction mixture was 268°C. Subsequently, the system was pressurized with nitrogen, and the resultant product was taken out through the nozzle at the bottom of the reactor as strands, then cooled with water, and pelletized to give an amorphous polyamide with taking 40 minutes. The melting point of the resultant polyamide was 258°C, and the number-average molecular weight thereof was 16000. As shown in Table 1, the yellowness index (YI) of the product at the start time of discharging the resultant polyamide pellets was -5; that is, the polyamide product had a good hue with no yellowness. Further, YI of the pellets in 20 minutes after the start of product discharging was -5, and YI of the pellets in 40 minutes after the start of product discharging was -4; that is, increase in YI with time was not almost recognized.

Example 2

Example 2 was conducted same as in Example 1 except that the reaction mixture was heated up while the upper limit was determined to be 253°C so as to be kept as a melt state until the molar ratio (diamine component/dicarboxylic acid component) of the reaction mixture during the dropwise addition of the diamine component thereinto reached 0.8. The melting point of the resultant polyamide was 258°C, and the number-average molecular weight thereof was 16000. As shown in Table 1, the yellowness index (YI) of the resultant polyamide pellets was -6 at the start of product discharging, -5 in 20 minutes and -5 in 40 minutes; that is, increase in YI with time was not almost recognized, and the polyamide obtained here had a good hue.

Example 3

Example 3 was conducted same as in Example 1 except that the reaction mixture was heated up while the upper limit was determined to be 255°C so as to be kept in a melt state until the molar ratio (diamine component/dicarboxylic acid component) of the reaction mixture during the dropwise addition of the diamine component thereinto reached 0.8. The melting point of the resultant polyamide was 258°C, and the number-average molecular weight thereof was 16000. As shown in Table 1, the yellowness index (YI) of the resultant polyamide pellets was -6 at the start of product discharging, -6 in 20 minutes and -4 in 40 minutes; that is, increase in YI with time was not almost recognized, and the polyamide obtained here had a good hue.

Example 4

Example 4 was conducted same as in Example 1 except that, as the diamine component, a mixed xylylenediamine containing 60 mol% of metaxylylenediamine and 40 mol% of paraxylylenediamine (purity: 99.95 wt%) was used, the reaction mixture was heated up while the upper limit was determined to be 255°C so as to be kept as a melt state until the molar ratio (diamine component/dicarboxylic acid component) of the reaction mixture during the dropwise addition of the diamine component thereinto reached 0.8, and thereafter the heating was so controlled that the temperature of the reaction mixture at the end of the dropwise addition of the diamine component was 269°C, and the temperature of the final reaction mixture was 270°C. The molar ratio (diamine component/dicarboxylic acid component) of the reaction mixture at the end of the dropwise addition of the diamine component was 1.0. The melting point of the resultant polyamide was 269°C, and the number-average molecular weight thereof was 16000. As shown in Table 1, the yellowness index (YI) of the resultant polyamide pellets was -4 at the start of product discharging, -4 in 20 minutes and -3 in 40 minutes; that is, increase in YI with time was not almost recognized.

Example 5

Example 5 was conducted same as in Example 1 except that, as the dicarboxylic acid component, 14.000 kg of sebacic acid (purity: 99.85 wt%) was used, and as the diamine component, 9.428 kg of a mixed xylylenediamine containing 25 mol% of metaxylylenediamine and 75 mol% of paraxylylenediamine (purity: 99.95 wt%) was used, the reaction mixture was heated while the upper limit was determined to be 255°C so as to be kept in a melt state until the molar ratio (diamine component/dicarboxylic acid component) of the reaction mixture during the dropwise addition of the diamine component thereinto reached 0.8, and thereafter the heating was so controlled that the temperature of the reaction mixture at the end of the dropwise addition of the diamine component was 265°C, and the temperature of the final reaction mixture was 273°C. The molar ratio (diamine component/dicarboxylic acid component) of the reaction mixture at the end of the dropwise addition of the diamine component was 1.0. The melting point of the resultant polyamide was 262°C, and the number-average molecular weight thereof was 16000. As shown in Table 1, the yellowness index (YI) of the resultant polyamide pellets was -2 at the start of product discharging, -2 in 20 minutes and -1 in 40 minutes; that is, increase in YI with time was not almost recognized.

Comparative Example 1

Comparative Example 1 was conducted same as in Example 1 except that the reaction mixture was heated up while the upper limit was determined to be 258°C so as to be kept in a melt state until the molar ratio (diamine component/dicarboxylic acid component) of the reaction mixture during the dropwise addition of the diamine component thereinto reached 0.8. The molar ratio at the time when the temperature of the reaction mixture exceeded 255°C was 0.6. The melting point of the resultant polyamide was 258°C, and the number-average molecular weight thereof was 16000. As shown in Table 2, the yellowness index (YI) of the resultant polyamide pellets was -4 at the start of product discharging, -2 in 20 minutes and +4 in 40 minutes; that is, YI was worsened and increase in YI with time was also recognized.

Comparative Example 2

Comparative Example 2 was conducted same as in Example 1 except that the reaction mixture was heated up while the upper limit was determined to be 261°C so as to be kept in a melt state until the molar ratio (diamine component/dicarboxylic acid component) of the reaction mixture during the dropwise addition of the diamine component thereinto reached 0.8. The molar ratio at the time when the temperature of the reaction mixture exceeded 255°C was 0.3. The melting point of the resultant polyamide was 258°C, and the number-average molecular weight thereof was 16000. As shown in Table 2, the yellowness index (YI) of the resultant polyamide pellets was -2 at the start of product discharging, +1 in 20 minutes and +6 in 40 minutes; that is, YI was worsened and increase in YI with time was also recognized.

Comparative Example 3

Comparative Example 3 was conducted same as in Example 4 except that the reaction mixture was heated up while the upper limit was determined to be 258°C so as to be kept in a melt state until the molar ratio (diamine component/dicarboxylic acid component) of the reaction mixture during the dropwise addition of the diamine component thereinto reached 0.8. The molar ratio at the time when the temperature of the reaction mixture exceeded 255°C was 0.6. The melting point of the resultant polyamide was 269°C, and the number-average molecular weight thereof was 16000. As shown in Table 2, the yellowness index (YI) of the resultant polyamide pellets was -3 at the start of product discharging, -1 in 20 minutes and +5 in 40 minutes; that is, YI was worsened and increase in YI with time was also recognized.

Table 1

|  | Diamine Component Mixed Xylylenediamine *1 | Dicarboxylic Acid Component | Highest Temperature of Reaction Mixture until molar ratio of 0.8 was reached | Melting Point of Polyamide (°C) | YI Profile 0 min | 20 min | 40 min |
|---|---|---|---|---|---|---|---|
| Example 1 | 30/70 | adipic acid | 250 | 258 | -5 | -5 | -4 |
| Example 2 | 30/70 | adipic acid | 253 | 258 | -6 | -5 | -5 |
| Example 3 | 30/70 | adipic acid | 255 | 258 | -6 | -6 | -4 |
| Example 4 | 40/60 | adipic acid | 255 | 269 | -4 | -4 | -3 |
| Example 5 | 75/25 | sebacic acid | 255 | 262 | -2 | -2 | -1 |
| *1 paraxylylenediamine (mol%)/metaxylylenediamine (mol%) in the total diamine component | | | | | | | |

Table 2

|  | Diamine Component Mixed Xylylenediamine *1 | Dicarboxylic Acid Component | Highest Temperature of Reaction Mixture until molar ratio of 0.8 was reached | Melting Point of Polyamide (°C) | YI Profile 0 min | 20 min | 40 min |
|---|---|---|---|---|---|---|---|
| Comparative Example 1 | 30/70 | adipic acid | 258 | 258 | -4 | -2 | +4 |

(continued)

| | Diamine Component | Dicarboxylic Acid Component | Highest Temperature of Reaction Mixture until molar ratio of 0.8 was reached | Melting Point of Polyamide (°C) | YI Profile | | |
|---|---|---|---|---|---|---|---|
| | Mixed Xylylenediamine *1 | | | | 0 min | 20 min | 40 min |
| Comparative Example 2 | 30/70 | adipic acid | 261 | 258 | -2 | +1 | +6 |
| Comparative Example 3 | 40/60 | adipic acid | 258 | 269 | -3 | -1 | +5 |
| *1 paraxylylenediamine (mol%)/metaxylylenediamine (mol%) in the total diamine component | | | | | | | |

Industrial Applicability

The polyamide resin having an improved hue that is obtained according to the production method of the present invention is favorably used in a wide range of fields such as molded articles, films, sheets, fibers, and so on.

**Claims**

1. A method for producing a polyamide having a melting point of 255°C or higher through polycondensation of a mixed xylylenediamine containing paraxylylenediamine as a diamine component and a dicarboxylic acid component in a batch reactor, wherein when the diamine component is dropwise added to the dicarboxylic acid component that has been kept in a melt state by heating it to a temperature not lower than a melting point thereof, under a pressure of 0.1 MPaG or more with keeping the melt state of a reaction mixture, a temperature of the reaction mixture is maintained at 255°C or lower until a molar ratio (diamine component/dicarboxylic acid component) of the reaction mixture reaches 0.8; and the temperature of the reaction mixture at an end of the dropwise addition is controlled to be not lower than the melting point of the polyamide.

2. The method for producing a polyamide according to claim 1, wherein the mixed xylylenediamine consists of paraxylylenediamine and metaxylylenediamine.

3. The method for producing a polyamide according to claim 1 or 2, wherein the mixed xylylenediamine contains at least 25 mol% of paraxylylenediamine.

4. The method for producing a polyamide according to any of claims 1 to 3, wherein the dicarboxylic acid component contains at least 70 mol% of adipic acid or sebacic acid.

## INTERNATIONAL SEARCH REPORT

| | International application No. |
|---|---|
| | PCT/JP2013/078626 |

### A. CLASSIFICATION OF SUBJECT MATTER
*C08G69/28*(2006.01)i

According to International Patent Classification (IPC) or to both national classification and IPC

### B. FIELDS SEARCHED

Minimum documentation searched (classification system followed by classification symbols)
C08G69/28

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2011/065347 A1 (Mitsubishi Gas Chemical Co., Inc.), 03 June 2011 (03.06.2011), claims 10, 12, 13; paragraphs [0035] to [0037], [0045]; examples & US 2012/0289643 A1 & EP 2505597 A1 & CN 102648232 A & KR 10-2012-0102056 A | 1-4 |
| A | JP 58-111829 A (Mitsubishi Gas Chemical Co., Inc.), 04 July 1983 (04.07.1983), entire text & US 4438257 A & EP 0084661 A1 & DE 3273988 D | 1-4 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 December, 2013 (26.12.13) | 14 January, 2014 (14.01.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2013/078626

C (Continuation).   DOCUMENTS CONSIDERED TO BE RELEVANT

| Category* | Citation of document, with indication, where appropriate, of the relevant passages | Relevant to claim No. |
|---|---|---|
| A | JP 57-200420 A  (Mitsubishi Gas Chemical Co., Inc.),<br>08 December 1982 (08.12.1982),<br>entire text<br>& US 4433136 A          & EP 0071000 A2<br>& DE 3273530 D | 1-4 |
| A | JP 8-259691 A  (Mitsubishi Gas Chemical Co., Inc.),<br>08 October 1996 (08.10.1996),<br>entire text<br>(Family: none) | 1-4 |
| A | JP 2010-007055 A  (Mitsubishi Gas Chemical Co., Inc.),<br>14 January 2010 (14.01.2010),<br>entire text<br>& US 2009/0299028 A1    & EP 2130853 A2<br>& CN 101591434 A        & KR 10-2009-0124958 A<br>& TW 201002758 A | 1-4 |
| A | JP 2009-286896 A  (Mitsubishi Gas Chemical Co., Inc.),<br>10 December 2009 (10.12.2009),<br>entire text<br>(Family: none) | 1-4 |

Form PCT/ISA/210 (continuation of second sheet) (July 2009)

**EP 2 918 625 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1014925 B
- JP 58111829 A

- JP 2010007055 A